# FASCICULE DE BREVET EUROPEEN

(11) **EP 3 184 007 B1**
(45) Date de publication et mention de la délivrance du brevet: **06.01.2021**
(21) Numéro de dépôt: 16206007.3
(22) Date de dépôt: 21.12.2016
(51) Int. Cl.: A47J 27/08, A47J 27/09

(54) **AUTOCUISEUR À RENFORT**
VERSTÄRKTER SCHNELLKOCHTOPF
REINFORCED PRESSURE COOKER

(30) Priorité: 23.12.2015 FR 1563210
(43) Date de publication de la demande: 28.06.2017
(73) Titulaire: SEB S.A., 69130 Ecully (FR)
(72) Inventeur: BARAILLE, Eric, Laurent, 21121 Fontaine Les Dijon (FR); RHETAT, Eric, 21000 Dijon (FR); CHAMEROY, Eric, 21260 Veronnes (FR)
(74) Mandataire: Weber, Jean-François

(56) Documents cités:
- WO-A1-94/13183
- WO-A1-2013/037976
- US-A1- 2014 339 223

## Description

La présente invention se rapporte au domaine technique généra! des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant une cuve, un couvercle, ainsi qu'un premier élément de positionnement solidaire du couvercle et formé d'au moins une première portion disposée sur le couvercle et d'une deuxième portion qui s'étend vers l'extérieur à partir de ladite première portion de façon à déborder radialement dudit couvercle, ledit appareil comprenant également un deuxième élément de positionnement solidaire de la cuve, lesdits cuve et couvercle étant conçus pour pouvoir être réunis selon au moins un premier agencement relatif prédéterminé dans lequel lesdits premier et deuxième éléments de positionnement sont mis en correspondance pour permettre de verrouiller le couvercle à la cuve.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Il existe différents types de moyens de verrouillage bien connus dans l'art antérieur. L'un des systèmes les plus répandus est le système de verrouillage à baïonnette, qui repose sur la mise en œuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve.

Afin de faciliter les opérations de verrouillage et de déverrouillage, il est connu de pourvoir les autocuiseurs à baïonnette d'une poignée de cuve et d'une poignée de couvercle qui s'étendent radialement respectivement vers l'extérieur de la cuve et du couvercle et qui sont destinées à être mises en regard l'une de l'autre pour permettre le verrouillage du couvercle relativement à la cuve. La poignée de couvercle est généralement formée par une pièce monobloc qui intègre habituellement un dispositif de soupape et éventuellement un bouton de commande de déverrouillage ainsi que le mécanisme associé. Cette pièce monobloc est habituellement réalisée en résine phénolique, qui est le matériau utilisé communément pour fabriquer les poignées des ustensiles de cuisson, en particulier les poignées de cuve et de couvercle des autocuiseurs. La résine phénolique présente en effet des propriétés, notamment sur le plan thermique (transfert thermique, effusivité...) qui la rendent particulièrement adaptée à cet usage. Elle est ainsi ininflammable, résistante à la température (elle ne fond pas) et très robuste. Le recours à une résine phénolique pour fabriquer les poignées permet ainsi de répondre de manière relativement satisfaisante aux conditions d'utilisations habituelles des autocuiseurs. En particulier, il est connu qu'en usage courant, lors des phases préliminaires à la cuisson sous pression, les utilisateurs ont l'habitude de poser le couvercle sur la cuve de façon aléatoire (sans forcément mettre en regard les poignées de cuve et du couvercle) afin d'utiliser l'autocuiseur comme un simple faitout. Par conséquent, le couvercle non verrouillé peut se trouver dans cette situation dans une orientation quelconque par rapport à la cuve, avec le risque de voir la poignée de couvercle directement exposée à un flux de chaleur élevée en provenance de la plaque de cuisson, voire même à une flamme en provenance de la plaque en question si cette dernière est par exemple une plaque au gaz. Le fait que la poignée de couvercle soit réalisée en résine phénolique permet ainsi d'éviter tout échauffement, dégradation ou inflammation de la poignée de couvercle.

Ces autocuiseurs connus, s'ils sont satisfaisants sur le plan sécuritaire, n'en présentent pas moins toutefois de sérieux inconvénients.

En effet, le moulage de la matière phénolique s'avère être une opération particulièrement contraignante sur le plan industriel, avec des temps de cycle de moulage relativement longs et des coûts de pièce élevés. En outre, le moulage de la matière phénolique impose des épaisseurs importantes et implique des limitations en matière d'esthétique et de coloration. La famille des polymères thermodurcissables comprend trois principaux matériaux, savoir :
- les phénoplastes (dont fait notamment partie le matériau vendu sous la marque déposée « *Bakélite* ® »), qui sont uniquement disponibles en noir, rouge et vert ;
- les aminoplastes, dont fait partie la mélamine, qui sont disponibles en n'importe quelle couleur mais qui sont relativement chers et lourds.
- les polyesters saturés, qui sont uniquement adaptés à la réalisation de pièces techniques mais pas de pièces à caractère esthétique.

Ceci limite donc les possibilités de différenciation esthétique des appareils.

Au surplus, les résines phénoliques, appréciées du fait de leur dureté, ne se recyclent en revanche que très difficilement, ce qui pose un problème sérieux en matière de gestion des déchets et de protection de l'environnement lorsque l'autocuiseur arrive en fin de vie.

Enfin, la résine phénolique supporte généralement difficilement les contraintes dans un environnement chaud et humide, comme c'est le cas par exemple au sein d'un lave-vaisselle, et présente une résistance à la flexion relativement médiocre, alors même que les pièces en résine phénolique montées sur le couvercle des autocuiseurs sont très régulièrement soumises à des sollicitations en flexion qui peuvent être significatives.

Le document WO - 2013/037976 A1 divulgue le préambule de la revendication 1.

L'invention se propose par conséquent de remédier aux différents inconvénients exposés précédemment et de proposer un nouvel appareil de cuisson d'aliments sous pression qui, tout en présentant un niveau de sécurité d'utilisation élevé ainsi qu'une grande robustesse, peut-être fabriqué de façon simple, rapide et peu coûteuse, au moyen d'un processus industriel particulièrement souple qui permet d'obtenir un autocuiseur particulièrement esthétique, léger et le cas échéant coloré.

Un autre objet de l'invention vise à proposer un nouvel appareil de cuisson d'aliments sous pression particulièrement résistant et dont la conception limite le risque de casse en cas de chute du couvercle.

Un autre objet de l'invention vise à proposer un nouvel appareil de cuisson d'aliments sous pression particulièrement léger et dont la conception permet d'obtenir un appareil à l'esthétique amélioré et qui est capable de résister de manière particulièrement efficace et durable aux conditions de lavage en lave-vaisselle.

Un autre objet de l'invention vise à proposer un nouvel appareil de cuisson d'aliments sous pression qui se prête particulièrement bien à des opérations de recyclage en fin de vie.

Un autre objet de l'invention vise à proposer un nouvel appareil de cuisson d'aliments sous pression de construction particulièrement simple et peu coûteuse.

Un autre objet de l'invention vise à proposer un nouvel appareil de cuisson d'aliments sous pression particulièrement robuste et compact.

Un autre objet de l'invention vise à proposer un nouvel appareil de cuisson d'aliments sous pression qui est conçu pour permettre à l'utilisateur de commander le verrouillage et le déverrouillage du couvercle relativement à la cuve de manière particulièrement simple et intuitive.

Les objets assignés à l'invention sont atteints à l'aide d'un appareil de cuisson d'aliments sous pression tel que défini par la revendication 1.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :

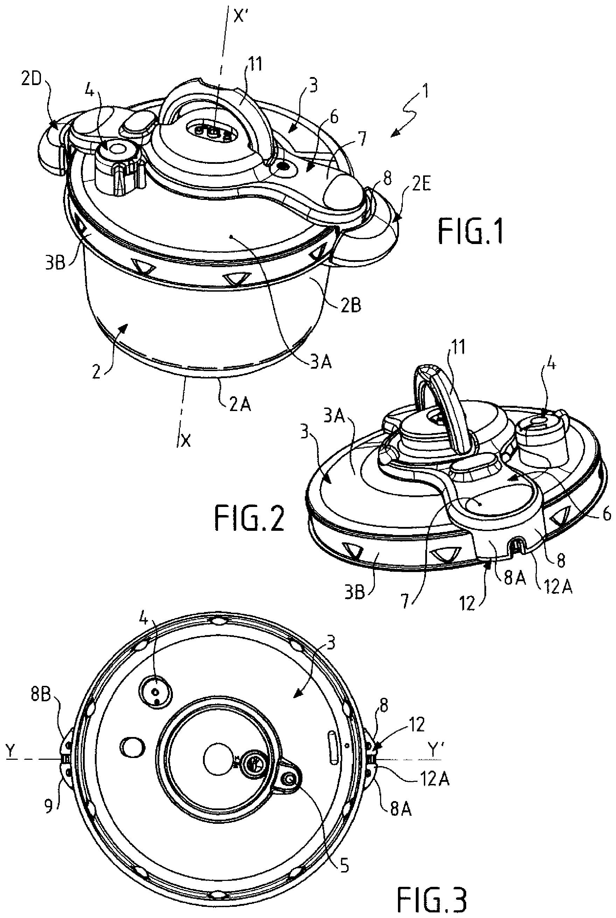

- La figure 1 illustre, selon une vue schématique en perspective, un appareil de cuisson d'aliments sous pression à verrouillage à baïonnette conforme à un premier mode de réalisation l'invention, et dont la cuve et le couvercle sont réunis selon un premier agencement relatif prédéterminé, correspondant à une configuration d'attente de verrouillage, à partir de laquelle il est ensuite possible de verrouiller le couvercle relativement à la cuve par pivotement du couvercle relativement à la cuve, afin d'amener en correspondance des rampes de cuve et de couvercle.
- La figure 2 illustre un sous-ensemble de couvercle de l'appareil de la figure 1, lequel sous-ensemble comprend le couvercle proprement dit ainsi que le premier élément de positionnement solidaire du couvercle et formé en l'espèce par une traverse disposée sur le couvercle et dont les extrémités débordent radialement du couvercle.
- La figure 3 est une vue de dessous du sous-ensemble de couvercle de la figure 2.

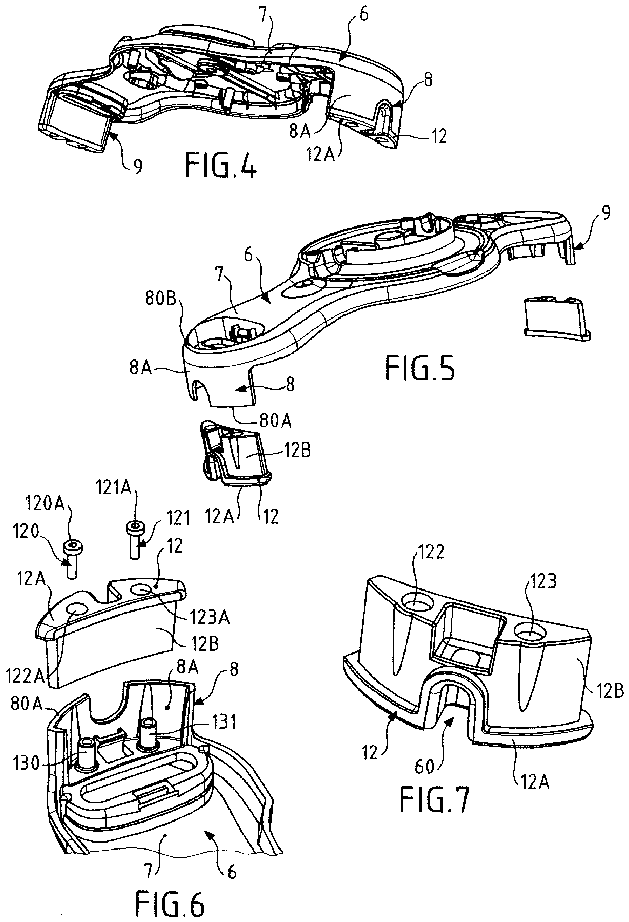

- La figure 4 illustre un sous-ensemble formant le premier élément de positionnement solidaire du couvercle des figures 2 et 3, ledit premier élément de positionnement étant en l'espèce constitué par une traverse qui est par exemple en matière thermoplastique et dont les extrémités sont localement associées à des pièces de renforts qui sont par exemple en matière thermodurcissable.
- La figure 5 est une vue éclatée du sous-ensemble de la figure 4.
- La figure 6 illustre un détail de la figure 5 concernant plus spécifiquement la façon dont sont assemblées la traverse et la pièce de renfort.
- La figure 7 illustre, selon une vue schématique en perspective, la pièce de renfort de la figure 6.

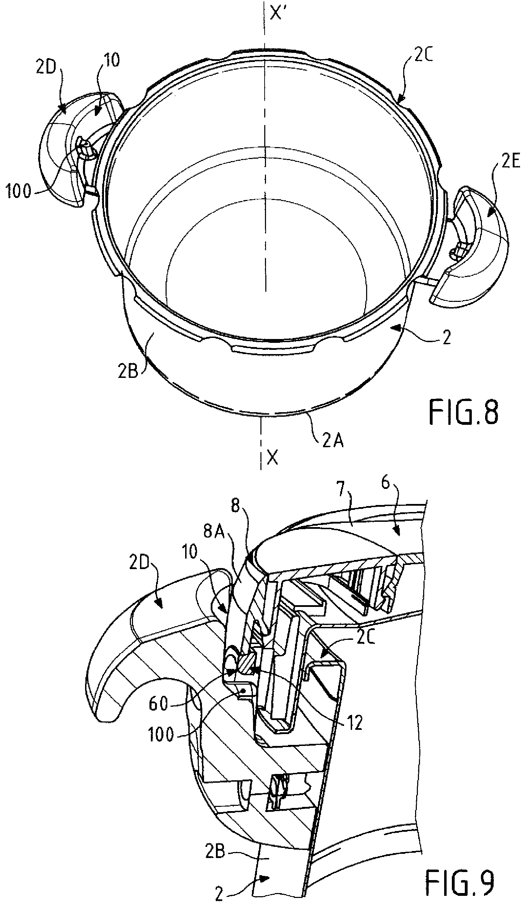

- La figure 8 illustre, selon une vue en perspective schématique, un sous-ensemble de cuve destiné à être associé au sous-ensemble de couvercle de la figure 2 pour former une enceinte de cuisson sous pression comme illustré par la figure 1, ledit sous-ensemble de cuve étant formé par la cuve proprement dite ainsi que par deux poignées de cuve fixées de façon diamétralement opposées à la surface latérale externe de la cuve.
- La figure 9 illustre, selon une vue schématique en coupe, un détail de la figure 1 relatif à la coopération entre le premier élément de positionnement solidaire du couvercle, formé en l'espèce par la traverse équipée de ses pièces de renfort illustrée à la figure 4, et un deuxième élément de positionnement solidaire de la cuve, formé en l'espèce par une conformation spécifique des poignées de cuve.

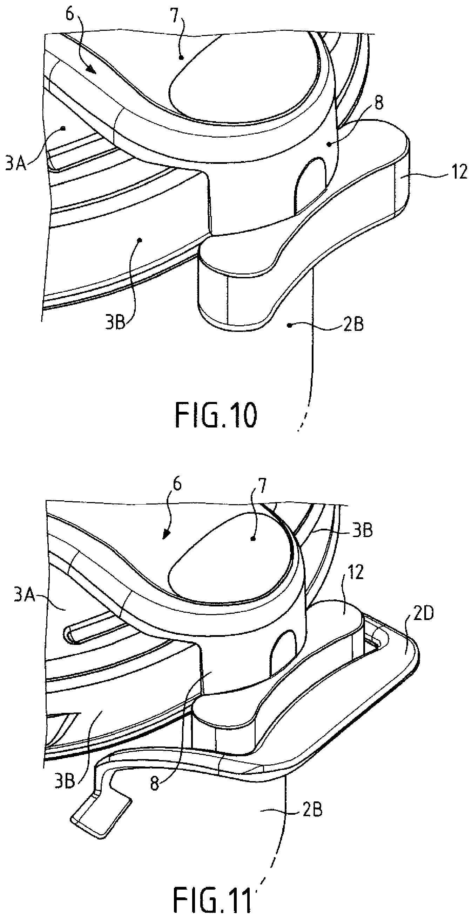

- Les figures 10 et 11 illustrent, selon des vues schématiques, des détails de réalisation d'un autocuiseur conforme à un deuxième mode de réalisation de l'invention, qui se différencie de l'autocuiseur du premier mode de réalisation essentiellement par le fait que la poignée de cuve est métallique (alors qu'elle est en plastique thermodurcissable dans le premier mode de réalisation) et que la pièce de renfort assure également une fonction d'adaptation géométrique permettant une complémentarité de forme entre la poignée de cuve métallique et le premier élément de positionnement.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 de cuisson d'aliments sous pression constitue donc un autocuiseur, destiné préférentiellement à être disposé sur une plaque de cuisson indépendante pour en chauffer le contenu.

L'appareil de cuisson 1 conforme à l'invention comporte au moins une cuve 2 formant récipient de cuisson, destiné à accueillir les aliments à cuire et présentant de préférence sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. L'appareil 1 comprend également de préférence au moins une poignée de cuve 2D solidaire de ladite cuve 2, de façon par exemple à faire saillie extérieurement de cette dernière. Dans le mode de réalisation illustré aux figures, ladite poignée 2D est monté sur la face externe de la paroi latérale 2B de la cuve 2, de façon à s'étendre radialement vers l'extérieur de la cuve 2 et à former ainsi une prise destinée à être attrapée manuellement par l'utilisateur pour manipuler la cuve 2 (par exemple pour la soulever et la déplacer). Dans le mode de réalisation illustré aux figures, l'appareil de cuisson 1 comprend deux poignées identiques 2D, 2E fixées sur la paroi latérale 2B de la cuve 2 de façon diamétralement opposée par rapport à l'axe central X-X', lesdites poignées 2D, 2E étant en l'espèce disposées à proximité du bord supérieur libre 2C de la cuve 2. Il est toutefois parfaitement envisageable que la cuve 2 ne soit munie que d'une seule poignée de cuve, ou de plus de deux poignées de cuve (par exemple trois ou quatre), sans pour autant que l'on sorte du cadre de l'invention. La cuve 2 et chaque poignée de cuve 2D, 2E qui lui est attachée forme ainsi un sous-ensemble de cuve, illustré en tant que tel à la figure 8. Chaque poignée de cuve 2D, 2E est par exemple réalisée en matière plastique, de préférence thermodurcissable (cas de la variante des figures 1 à 9) ou en métal (variante des figures 10 et 11).

L'appareil 1 conforme à l'invention comprend également un couvercle 3 destiné à être associé à la cuve 2 et verrouillé relativement à cette dernière pour former une enceinte de cuisson apte à monter en pression, c'est-à-dire une enceinte de cuisson suffisamment hermétique pour permettre la montée en pression de l'appareil 1. Afin d'obtenir ce caractère étanche, l'appareil 1 inclut avantageusement une garniture d'étanchéité (non illustrée), formée de préférence par un joint annulaire souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur. Le couvercle 3 est de manière classique fabriqué à partir d'un matériau métallique tel que l'acier inoxydable ou l'aluminium. Dans le mode de réalisation illustré aux figures, le couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans ce mode de réalisation, le couvercle 3 inclut également avantageusement une ceinture annulaire 3B, formée par un bord tombant qui s'étend vers le bas à partir de la périphérie de l'élément de couverture discoïde 3A. Le couvercle 3 est préférentiellement destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C, tandis que l'élément de couverture discoïde 3A repose en appui sur le bord libre 2C, par l'intermédiaire du joint d'étanchéité interposé entre la cuve 2 et le couvercle 3. Il est cependant parfaitement envisageable que la ceinture annulaire 3B soit alternativement destinée à être insérée au sein de la cuve 2, de façon à être entourée par, et contenue dans, la cuve 2, sans pour autant que l'on sorte du cadre de l'invention.

L'appareil 1 de cuisson d'aliments sous pression conforme à l'invention comprend avantageusement un moyen de régulation de pression 4, comme par exemple une soupape, montée de préférence sur le couvercle 3, de façon par exemple à être portée directement par ledit couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, et qui est de préférence de l'ordre de 100 kPa. L'appareil 1 de cuisson d'aliments sous pression peut comporter d'autres organes de fonctionnement (par exemple un moyen de sécurité à l'ouverture 5, etc.).

Conformément à l'invention, l'appareil de cuisson 1 comprend un premier élément de positionnement 6 solidaire du couvercle 3, c'est-à-dire attaché à ce dernier, de préférence de façon permanente. La liaison mécanique entre le premier élément de positionnement 6 et le couvercle 3 peut être une liaison de type « *encastrement* », auquel cas le premier élément de positionnement 6 est sensiblement immobilisé relativement au couvercle 3 et ne peut pas se déplacer relativement à ce dernier. Cette liaison mécanique peut au contraire, comme dans l'exemple illustré aux figures, autoriser un déplacement relatif du premier élément de positionnement 6 et du couvercle 3, par exemple un déplacement en rotation du couvercle 3 relativement au premier élément de positionnement 6. Comme illustré aux figures, le premier élément de positionnement 6 est formé d'au moins une première portion 7 disposée sur le couvercle 3, par exemple de façon à recouvrir au moins en partie la face externe du couvercle 3. Le premier élément de positionnement 6 est également formé d'une deuxième portion 8 qui s'étend vers l'extérieur à partir de ladite première portion 7, et de préférence dans la continuité de cette dernière, de façon à déborder radialement dudit couvercle 3. En d'autres termes, le premier élément de positionnement 6 s'étend sensiblement au-delà de la périphérie du couvercle 3 selon la direction radiale concernée Y-Y' (cf. figure 3), de sorte que ledit premier élément de positionnement 6 fait saillie latéralement du couvercle 3, avec sa deuxième portion 8 qui forme une excroissance radiale à la périphérie du couvercle 3 (cf. figure 3). Avantageusement, la première portion 7, qui est montée au-dessus du couvercle 3, par exemple sur et contre la face externe de l'élément de couvercle discoïde 3A, est directement prolongée par la deuxième portion 8, laquelle comprend avantageusement une paroi latérale 8A qui s'élève verticalement entre un bord inférieur libre 80A et un bord supérieur 80B relié à ladite première portion 7. Ledit bord inférieur 80A est orienté vers le bas lors du fonctionnement normal de l'appareil 1, comme illustré aux figures. La paroi latérale 8A s'étend avantageusement localement en regard de la ceinture annulaire 3B, parallèlement à cette dernière et selon une hauteur analogue à celle de ladite ceinture annuaire 3B.

De préférence, ladite deuxième portion 8 vient de matière avec ladite première portion 7, de sorte que lesdites première et deuxième portions 7, 8 forment une pièce monobloc d'un seul tenant. Dans l'exemple illustré aux figures, la pièce monobloc en question se présente sous la forme d'une traverse, avec un élément principal allongé (correspondant à la première portion) prolongé vers chacune de ses extrémités par un bord tombant, l'un desdits bords tombant formant en l'espèce ladite paroi latérale 8A de la deuxième portion 8. Il est cependant tout à fait envisageable, sans pour autant que l'on sorte du cadre invention, que la deuxième portion 8 soit distincte de la première portion 7 et soit simplement fixé par tout moyen approprié à cette dernière, sans pour autant que l'on sorte du cadre de l'invention.

Dans l'exemple illustré aux figures, le premier élément de positionnement 6 est ainsi formé d'une première portion 7 disposée sur le couvercle 3, d'une deuxième portion 8 qui s'étend vers l'extérieur à partir d'une première extrémité de la première portion 7 de façon à déborder radialement du couvercle 3, ainsi que d'une troisième portion 9 qui s'étend vers l'extérieur à partir d'une deuxième extrémité de ladite première portion 7 de façon à déborder radialement du couvercle 3, de manière diamétralement opposée à la deuxième portion 8, lesdites deuxièmes portions 8 et troisième portion 9 étant sensiblement identiques et symétriques. Il est cependant parfaitement envisageable que le premier élément de positionnement 6 ne déborde que d'un côté du couvercle, auquel cas la deuxième portion 8 est seule à s'étendre vers l'extérieur à partir de la première portion 7 de façon à déborder radialement dudit couvercle 3. Avantageusement, la deuxième portion 8 comprend une paroi latérale 8A qui s'élève verticalement entre un bord inférieur libre 80A et un bord supérieur 80B relié à ladite première portion 7, ladite paroi latérale 8A étant par exemple disposée de façon à s'étendre localement au droit et sur la hauteur de la ceinture 3B du couvercle 3, comme illustré aux figures. Dans ce mode de réalisation préférentiel, le bord inférieur libre 80A est orienté vers le bas lors du fonctionnement normal de l'appareil 1.

Comme illustré, l'appareil 1 comprend également un deuxième élément de positionnement 10 solidaire de la cuve 2, ledit deuxième élément de positionnement 10 étant avantageusement porté, ou formé au moins en partie, par la poignée de cuve 2D. Par exemple, comme illustré aux figures, la poignée de cuve 2D est conformée pour ménager un logement qui fait partie du deuxième élément de positionnement 10 et qui est destiné à accueillir le premier élément de positionnement 6.

Comme illustré par la figure 1, lesdits cuve 2 et couvercle 3 sont conçus pour pouvoir être réunis selon au moins un premier agencement relatif prédéterminé dans lequel lesdits premier et deuxième éléments de positionnement 6, 10 sont mis en correspondance pour permettre de verrouiller le couvercle 3 à la cuve 2. En d'autres termes, les premier et deuxième éléments de positionnement 6, 10 coopèrent, lorsque les cuve 2 et couvercle 3 sont réunis selon ledit premier agencement relatif prédéterminé, de façon que la position relative du couvercle 3 et de la cuve 2 corresponde au verrouillage du couvercle 3 relativement la cuve 2 ou soit compatible avec le verrouillage du couvercle 3 relativement à la cuve 2. De préférence, ladite coopération desdits premier et deuxième éléments de positionnement 6, 10 consiste en une coopération mécanique, et en l'espèce une coopération par complémentarité de formes, desdits premier et deuxième éléments de positionnement 6, 10. Comme illustré aux figures, ladite coopération desdits premier et deuxième éléments de positionnement 6, 10 consiste avantageusement en une coopération de la deuxième portion 8 avec ledit deuxième élément de positionnement 10, ladite deuxième portion 8 présentant une conformation coopérant en emboîtement avec une conformation de forme complémentaire du deuxième élément de positionnement 10.

Dans les modes de réalisation illustrés aux figures, l'appareil 1 comprend un système de verrouillage à baïonnette capable, lorsque lesdits cuve 2 et couvercle 3 sont réunis selon ledit premier agencement relatif prédéterminé, de verrouiller le couvercle 3 à la cuve 2 par pivotement du couvercle 3 relativement au premier élément de positionnement 6 selon l'axe vertical central X-X', lesdits premier et deuxième éléments de positionnement 6, 10 étant conçus pour interagir mécaniquement, lorsque lesdits cuve 2 et couvercle 3 sont réunis selon ledit premier agencement relatif prédéterminé, pour verrouiller le positionnement angulaire relatif du premier élément de positionnement 6 et de la cuve 2 dans un plan horizontal perpendiculaire audit axe vertical central X-X'. Le premier agencement relatif prédéterminé constitue ainsi, dans ce mode de réalisation particulier, une configuration d'attente de verrouillage, dans laquelle le couvercle 3 est rapporté sur la cuve 2 et repose librement sur cette dernière (figure 1). Dans les modes de réalisation préférentiels illustrés aux figures, les premier et deuxième éléments de positionnement 6, 10 présentent avantageusement et respectivement une première conformation et une deuxième conformation complémentaires destinées à interagir mécaniquement selon une coopération mâle/femelle lorsque lesdits cuves 2 et couvercles 3 sont réunis sur ledit premier agencement relatif prédéterminé, afin par exemple de verrouiller en rotation dans un plan horizontal le premier élément de positionnement 6 relativement au deuxième élément de positionnement 10. Le système de verrouillage à baïonnette mis en œuvre dans ce mode de réalisation particulier permet de faire passer l'appareil 1 de la configuration d'attente de verrouillage précité à une configuration de verrouillage dans laquelle la cuve 2 et le couvercle 3 interagissent pour empêcher leur libre séparation. Dans ce mode de réalisation spécifique, le passage de la configuration d'attente de verrouillage à la configuration de verrouillage s'effectue par rotation du couvercle 3 relativement la cuve 2 selon une course angulaire prédéterminée autour de l'axe central X-X'. Le système de verrouillage à baïonnette de l'appareil de cuisson 1 illustré aux figures comprend avantageusement à cet effet des première et deuxième séries d'excroissances radiale de verrouillage qui sont solidaires respectivement du couvercle 3 et de la cuve 2 et qui sont conçus, afin d'assurer le verrouillage et le déverrouillage du couvercle 3 relativement la cuve 2, pour venir s'engager, respectivement se dégager, mutuellement par rotation du couvercle 3 relativement la cuve 2 autour de l'axe vertical central X-X' selon ladite course angulaire prédéterminée. Comme cela est bien connu en tant que tel, les excroissances de chacune desdites première et deuxième séries susvisées sont destinées à coopérer deux à deux, de sorte que chaque excroissance de l'une desdites séries est amenée, par rotation du couvercle 3 relativement à la cuve 2 à partir du premier agencement relatif prédéterminé, à passer sous une excroissance correspondante de l'autre série pour verrouiller le couvercle 3 relativement la cuve 2.

L'invention n'est bien entendue pas limitée à une configuration spécifique des excroissances en question, l'essentiel étant que lesdites excroissances, formant respectivement des rampes de couvercle et de cuve, coopèrent par mise en rotation relative de la cuve 2 et du couvercle 3 afin de réaliser une liaison mécanique entre la cuve 2 et le couvercle 3 capable de résister la pression interne régnant dans l'enceinte de cuisson.

De préférence, la rotation du couvercle 3 relativement au premier élément de positionnement 6 est commandée par un organe de commande manuelle 11 formé par exemple par une anse pivotante (ou par tout autre moyen approprié, par exemple un levier pivotant ou un curseur coulissant...) reliée au premier élément de positionnement 6 et au couvercle 3 par une liaison cinématique permettant de transformer le déplacement de l'anse 11 relativement au premier élément de positionnement 6 en rotation du couvercle 3 relativement au premier élément de positionnement 6. Ainsi, dans ce mode de réalisation préférentiel, le premier agencement relatif prédéterminé correspond à une configuration dans laquelle le couvercle 3 n'est pas verrouillé relativement la cuve 2 mais à partir de laquelle il est possible de verrouiller le couvercle 3 à la cuve 2 (en l'espèce par rotation selon une course angulaire prédéterminée du couvercle 3 relativement la cuve 2, rotation commandée par exemple par un organe de commande manuelle 11). Dans ce cas, la mise en correspondance des premier et deuxième éléments de positionnement 6, 10 est utilisée pour assurer le positionnement adéquat du couvercle 3 relativement la cuve 2, et pour empêcher la rotation, dans un plan horizontal, du premier élément de positionnement 6 relativement la cuve 2 de façon à pouvoir commander la rotation du couvercle 3 relativement au premier élément de positionnement 6, afin d'amener le couvercle 3 dans une position de verrouillage relativement la cuve 2.

Il est cependant tout à fait envisageable, sans pour autant que l'on sorte du cadre de l'invention, que le premier agencement relatif prédéterminé corresponde à un positionnement relatif de la cuve 2 et du couvercle 3 dans lequel le couvercle 3 est verrouillé à la cuve 2. Un tel cas de figure correspond par exemple à un mode de réalisation où l'appareil de cuisson d'aliments sous pression comprend un système de verrouillage à baïonnette avec des rampes de cuve et de couvercle, le premier élément de positionnement 6 formant une poignée de couvercle tandis que le deuxième élément de positionnement 10 forme une poignée de cuve. Dans ce mode de réalisation alternatif, le couvercle 3 est tout d'abord disposé sur la cuve 2 dans une position d'attente dans laquelle lesdites poignées de cuve et de couvercle sont décalés angulairement, puis le couvercle est tourné manuellement de façon à venir aligner lesdites poignées de cuve et de couvercle, en superposition, de sorte que le couvercle 3 et la cuve 2 se retrouvent alors dans une position relative correspondant au verrouillage du couvercle sur la cuve par inter-engagement des rampes de cuve et de couvercle. Dans ce cas, le premier agencement relatif prédéterminé correspond à la configuration dans laquelle les poignées de cuve et de couvercle sont alignées.

Par conséquent, au sens de l'invention, le premier agencement relatif prédéterminé correspond à une mise en correspondance des premier et deuxième éléments de positionnement 6, 10 à partir de laquelle il est possible de verrouiller le couvercle 3 relativement à la cuve 2, ou dans laquelle le couvercle 3 est verrouillé relativement à la cuve 2. Le premier agencement relatif prédéterminé est donc un agencement dans lequel lesdits premier et deuxième éléments de positionnement 6, 10 sont mis en correspondance dans le but de verrouiller le couvercle 3 à la cuve 2.

Bien entendu, l'invention n'est pas limitée à un appareil de cuisson 1 pourvu d'un système de verrouillage à baïonnette, et il est par exemple tout à fait possible que le système de verrouillage soit un système de verrouillage à étrier, ou encore un système de verrouillage à segments mettant en œuvre des éléments mâles montés à coulissement relativement au couvercle 3 de manière à coopérer avec des orifices conjugués ménagés à travers la paroi latérale 2B de la cuve 2.

Comme illustré aux figures, le premier élément de positionnement 6 comprend également une pièce de renfort 12 qui est solidaire de ladite deuxième portion 8 et est conformée pour au moins protéger thermiquement ladite deuxième portion 8. Plus précisément, la pièce de renfort 12 est destinée à être attachée à ladite deuxième portion 8 de façon à former un écran de protection protégeant localement ladite deuxième portion 8. Cette protection est au moins une protection thermique, visant en particulier à prémunir la deuxième portion 8 contre toute dégradation notamment par fusion ou inflammation.

L'invention repose ainsi sur l'idée de recourir non pas une pièce massive monobloc présentant des propriétés homogènes, mais à l'association locale de deux éléments, à savoir la deuxième portion 8 et la pièce de renfort 12, qui sont avantageusement de natures différentes, pour obtenir un compromis optimal.

De préférence, comme illustré à la figure 3, la pièce de renfort 12 est conformée et agencée relativement à la deuxième portion 8 de telle sorte que la projection orthogonale du sous-ensemble de couvercle (formé par le couvercle 3 et le premier élément de positionnement 6 qui lui est attaché) sur un plan horizontal disposé sous le couvercle 3 (i.e. en regard de la face interne du couvercle 3) parallèlement à l'axe Y-Y' est formée uniquement par le couvercle 3 (qui est avantageusement en métal) et la pièce de renfort 12, à l'exclusion de la première portion 7 et de la deuxième portion 8 qui sont entièrement masquées, comme illustré par la figure 3, par le couvercle 3 et la pièce de renfort 12 et ne se projettent donc pas sur le plan en question.

Avantageusement, la pièce de renfort 12 est également conformée pour renforcer mécaniquement ladite deuxième portion 8. Ainsi, la pièce de renfort 12 assure une protection globale de la deuxième portion 8, laquelle est particulièrement exposée, tant sur le plan thermique que mécanique, du fait qu'elle déborde radialement du couvercle 3.

Avantageusement, la deuxième portion 8 est réalisée en un matériau thermoplastique, tout comme de préférence la première portion 7. Dans le cas préférentiel où la deuxième portion 8 vient de matière avec la première portion 7, ladite pièce monobloc est dans ce cas avantageusement réalisée, de préférence intégralement, en un matériau thermoplastique. Le recours à un matériau thermoplastique s'avère particulièrement avantageux, surtout s'agissant d'une pièce apparente telle que le premier élément de positionnement 6, puisqu'il autorise l'obtention d'une pièce d'épaisseur réduite et de conformation très travaillée, avec possibilité de coloration de la matière. Les matériaux thermoplastiques s'avèrent en outre être particulièrement résistants aux lavages répétés en lave-vaisselle.

Avantageusement, la pièce de renfort 12 est quant à elle réalisée en un matériau thermodurcissable, de façon à former localement un bouclier de protection thermique, ainsi que de préférence un renfort mécanique.

Ainsi, dans ce mode de réalisation particulièrement avantageux, le premier élément de positionnement 6 est formé par l'association d'une pièce monobloc principale en matériau thermoplastique, qui forme les première et deuxième portions 7, 8, et d'un protecteur local en matière thermodurcissable qui assure localement le renforcement thermique et mécanique de la portion exposée du premier élément de positionnement 6 (c'est à dire la deuxième portion 8 qui fait saillie radialement du couvercle 3).

Selon l'invention différents matériaux thermodurcissables peuvent bien entendu être mis en œuvre, comme par exemple une résine phénolique ou un élastomère, l'essentiel étant que le matériau en question présente des propriétés thermiques (résistance à la fusion et l'inflammation en particulier) adaptées. Le recours à un matériau thermodurcissable pour réaliser les pièces de renfort 12 n'est bien entendu absolument pas obligatoire, et la pièce de renfort 12 peut être ainsi réalisée en un matériau thermodurcissable et/ou en un matériau minéral et/ou en un matériau métallique, sans pour autant que l'on sorte du cadre de l'invention.

L'invention découle ainsi du constat surprenant qu'il suffit de prévoir un bouclier de protection thermique local de la deuxième portion 8 pour obtenir un appareil parfaitement fonctionnel et sûr, sans qu'il ne soit nécessaire de réaliser l'ensemble de la pièce monobloc formant le premier élément de positionnement 6 en un matériau présentant des propriétés élevées en matière de résistance thermique et mécanique.

Avantageusement, la pièce de renfort 12 recouvre ledit bord inférieur libre 80A de la deuxième portion 8, lequel est orienté vers le bas lorsque le couvercle 3 et la cuve 2 sont réunis selon ledit premier agencement. La pièce de renfort 12 couvre ainsi sensiblement intégralement le bord inférieur libre 80A, sur sensiblement toute la surface de ce dernier, ce qui permet de protéger efficacement la deuxième portion 8 tant sur le plan thermique que mécanique. Ainsi, dans ce mode de réalisation préférentiel illustré aux figures, la pièce de renfort 12 habille entièrement la face inférieure de la deuxième portion 8, laquelle face inférieure est tournée vers le bas et forme ledit bord inférieur 80A.

De préférence, ladite pièce de renfort 12 est attachée directement à la deuxième portion 8, et en l'espèce directement au bord inférieur libre 80A qui de préférence supporte ladite pièce de renfort 12. Dans ce mode de réalisation préférentiel, la pièce de renfort 12 est donc embarquée sur la deuxième portion 8 et est attachée préférentiellement de façon fixe, sans faculté de mouvement relatif relativement à ladite deuxième portion 8.

De préférence, la pièce de renfort 12 recouvre uniquement le bord inférieur 8A, et laisse libre en particulier la paroi latérale 8A. L'invention a en effet mis en évidence qu'un niveau de protection parfaitement suffisant sur le plan thermique pouvait être obtenu en venant simplement et uniquement recouvrir le bord inférieur 8A par une pièce de renfort 12 qui s'étend au droit de ce dernier de façon à affleurer la surface externe de la paroi latérale 8A, ladite surface externe de la paroi latérale 8A pouvant quant à elle être laissée nue. Un tel agencement permet en effet de manière surprenante d'obtenir un niveau de sécurité optimal en matière de résistance à la flamme et à la température. Il est ainsi possible de mettre en œuvre, à titre de premier élément de positionnement 6, une pièce en matière thermoplastique dont une portion significative (formée par la paroi latérale 8A) déborde radialement du couvercle tout en étant laissée nue, car le simple fait de recouvrir uniquement la tranche (bord inférieur libre 8A) de la paroi latérale 7A nue en question au moyen de la pièce de renfort 12 (laquelle est avantageusement réalisée en matière thermodurcissable) suffit pour obtenir un niveau de sécurité acceptable.

De préférence, la pièce de renfort 12 comprend d'une part une semelle 12A qui habille le bord inférieur 80A et d'autre part un insert 12B qui s'élève à partir de ladite semelle 12A, de préférence sensiblement parallèlement à ladite paroi latérale 8A, de façon par exemple à être interposé entre la ceinture annulaire 3B et ladite paroi latérale 8A. La pièce de renfort 12 forme ainsi un sabot avec un corps principal formé par l'insert 12B et une embase formée par la semelle 12A qui épouse le bord inférieur libre 80A de la deuxième portion. L'insert 12B présente avantageusement un caractère volumique massif, ce qui permet de rigidifier et renforcer la deuxième portion 8, et plus précisément la paroi latérale 8A, tant sur le plan mécanique que thermique, l'insert 12B formant avantageusement un tampon thermique qui contribue à protéger la deuxième portion 8 en association avec la semelle 12A qui procure un effet de bouclier thermique. De préférence, comme illustré aux figures, l'insert 12B vient de matière avec la semelle 12A, de sorte que lesdits semelles 12A et insert 12B forment une pièce monobloc d'un seul tenant, obtenue par exemple par moulage de matière plastique, et plus préférentiellement par moulage de matière thermodurcissable.

Avantageusement, le premier élément de positionnement 6 comprend également des moyens de fixation pour fixer ledit insert 12B à ladite deuxième portion 8 et assurer ainsi la solidarisation de la pièce de renfort 12 à la deuxième portion 8. Ainsi, la semelle 12A est avantageusement maintenue le long du, et contre le, bord inférieur libre 80A par l'intermédiaire de la fixation établie entre l'insert 12B et la deuxième portion 8. Par exemple, les moyens de fixation en question comprennent au moins une vis 120 avec une tête 120A (et par exemple deux vis 120, 121 avec des têtes respectives 120A, 121A), ainsi qu'un orifice correspondant disposé au fond d'un puits 122A, 123A ménagé à partir de ladite semelle 12A, ladite vis 120, 121 étant destinée à être insérée dans le puits 122A, 123A pour que sa tête 120A, 121A soit noyée dans le puits 122A, 123A en question, ce qui permet d'éviter tout contact entre la main d'un utilisateur et la tête de vis en question, et donc tout risque de brûlure. Chaque vis 120,121 est en l'espèce enfilée dans le puits 122A, 123A jusqu'à ce que sa tête 120A, 121A vienne en appui contre le bord de l'orifice ménagé au fond du puits, les tiges filetées de chaque vis passant par l'orifice correspondant pour venir coopérer avec des tubes filetés 130, 131 solidaires de la deuxième portion 8. Les tubes filetés 130,131 sont destinés être insérés dans des logements conjugués 122, 123 ménagés dans la pièce de renfort 12, plus précisément dans l'insert 12B, de façon à être en communication respective avec les puits 122A, 123A et leurs orifices correspondants.

L'invention n'est cependant pas limitée à un tel mode de fixation à vis, et il est par exemple tout à fait envisageable que la pièce de renfort 12 soit assemblée à la deuxième portion 8 par clipsage, collage, soudure ultrasons, ou même surmoulage.

De préférence, ladite première conformation évoquée précédemment, destiné à interagir mécaniquement selon une coopération mâle/femelle avec la deuxième conformation complémentaire du deuxième élément de positionnement 10, est formée, au moins en partie, par ladite pièce de renfort 12. Grâce à cette caractéristique, les efforts de coopération mâle/femelle s'exerçant sur la première conformation peuvent être repris, au moins en partie, par la pièce de renfort 12, qui est avantageusement réalisée en matière thermodurcissable et présente donc de ce fait une robustesse supérieure à celle de la mince plaque formant la paroi latérale 8A qui est avantageusement réalisée en matière thermoplastique. Dans l'exemple illustré aux figures 1 à 9, la première conformation est formée par une encoche 60, tandis que la deuxième conformation est formée par un téton 100 qui vient avantageusement de matière avec la poignée de cuve 2D. La pièce de renfort 12 est quant à elle conformée pour réaliser l'encoche 60, c'est-à-dire qu'elle présente une concavité locale qui forme un logement directement délimité par la pièce de renfort 12. Ainsi, dans ce mode de réalisation avantageux selon lequel la pièce de renfort 12 est en matière thermodurcissable, tout comme la poignée de cuve 2D et son téton 100, la coopération mâle/femelle, qui permet avantageusement de verrouiller angulairement le premier élément de positionnement 6 relativement à la cuve 2, s'effectue entre deux pièces conjuguées (le téton 100 et le logement formé par l'encoche 60) réalisées avantageusement toutes deux en matériau thermodurcissable, ce qui permet d'obtenir une fiabilité et une robustesse accrue sur le plan mécanique.

Dans le mode de réalisation des figures 10 et 11, la poignée de cuve 2D est métallique et se présente par exemple sous la forme d'une anse à profil en U, attachée par ses extrémités libres à la paroi latérale 2B de la cuve 2, l'âme du U étant de préférence élargie pour faciliter la prise de l'utilisateur. La pièce de renfort 12 forme avantageusement une pièce d'adaptation, destinée à coopérer par correspondance de forme avec la poignée de cuve 2D, comme illustré à la figure 11. Par exemple, la pièce de renfort 12 se présente sous la forme d'un bloc qui forme une excroissance à la base de la deuxième portion 8, et dont le profil est par exemple de forme conjuguée à celui du profil de la poignée de cuve 2D, de façon à permettre une coopération de formes entre ledit bloc et la poignée de cuve 2D. Il est ainsi possible, par simple remplacement d'une seule pièce (la pièce de renfort 12), d'adapter le sous-ensemble de couvercle de la variante des figures 1 à 9 à une cuve pourvue d'une poignée différente (en l'espèce une poignée métallique à profil en U). Dans ce cas la pièce de renfort 12 joue donc le rôle d'une pièce d'adaptation qui peut être envisagée pour maintenir le principe de fonctionnement dans un environnement différent (poignées de cuves différentes). La pièce de renfort 12 peut par conséquent jouer le rôle de pièce de personnalisation, de différenciation.

## Revendications

1. Appareil de cuisson (1) d'aliments sous pression comportant une cuve (2), un couvercle (3), ainsi qu'un premier élément de positionnement (6) solidaire du couvercle (3) et formé d'au moins une première portion (7) disposée sur le couvercle (3) et d'une deuxième portion (8) qui s'étend vers l'extérieur à partir de ladite première portion (7) de façon à déborder radialement dudit couvercle (3), ledit appareil (1) comprenant également un deuxième élément de positionnement (10) solidaire de la cuve (2), lesdits cuve (2) et couvercle (3) étant conçus pour pouvoir être réunis selon au moins un premier agencement relatif prédéterminé dans lequel lesdits premier et deuxième éléments de positionnement (6, 10) sont mis en correspondance pour permettre de verrouiller le couvercle (3) à la cuve (2), **caractérisé en ce que** ledit premier élément de positionnement (6) comprend également une pièce de renfort (12) qui est solidaire de ladite deuxième portion (8) et est conformée pour au moins protéger thermiquement ladite deuxième portion (8), ladite pièce de renfort (12) étant réalisée en un matériau thermodurcissable, comme par exemple une résine phénolique ou un élastomère, et/ou en un matériau minéral, et/ou en un matériau métallique.

2. Appareil (1) selon la revendication 1 **caractérisé en ce que** ladite pièce de renfort (12) est également conformée pour renforcer mécaniquement ladite deuxième portion (8).

3. Appareil (1) selon la revendication 1 ou 2 **caractérisé en ce que** ladite deuxième portion (8) est réalisée en un matériau thermoplastique.

4. Appareil (1) selon l'une quelconque des revendications 1 à 3 **caractérisé en ce que** ladite deuxième portion (8) vient de matière avec ladite première portion (7), de sorte que lesdites première et deuxième portions forment une pièce monobloc d'un seul tenant.

5. Appareil selon la revendication 4 **caractérisé en ce que** ladite pièce monobloc est réalisée en un matériau thermoplastique.

6. Appareil (1) selon l'une quelconque des revendications 1 à 5 **caractérisé en ce que** ladite deuxième portion (8) comprend une paroi latérale (8A) qui s'élève verticalement entre un bord inférieur libre (80A) et un bord supérieur (80B) relié à ladite première portion (7), ledit bord inférieur libre (80A) étant orienté vers le bas lorsque le couvercle (3) et la cuve (2) sont réunis selon ledit premier agencement, ladite pièce de renfort (12) recouvrant ledit bord inférieur (80B).

7. Appareil selon la revendication 6 **caractérisé en ce que** ladite pièce de renfort (12) recouvre uniquement ledit bord inférieur (80A).

8. Appareil (1) selon la revendication 6 ou 7 **caractérisé en ce que** ladite pièce de renfort (12) comprend d'une part une semelle (12A) qui habille ledit bord inférieur (80A) et d'autre part un insert (12B) qui s'élève à partir de ladite semelle (12A), sensiblement parallèlement à ladite paroi latérale (8A), ledit premier élément de positionnement (6) comprenant également des moyens de fixation pour fixer ledit insert (12B) à ladite deuxième portion (8) et assurer ainsi la solidarisation de la pièce de renfort (12) à la deuxième portion (8).

9. Appareil (1) selon la revendication 8 **caractérisé en ce que** lesdits moyens de fixation comprennent au moins une vis (120) avec une tête (120A), ainsi qu'un orifice disposé au fond d'un puits (122A, 123A) ménagé à partir de ladite semelle (12A), ladite vis étant destinée à être insérée dans le puits (122A, 123A) pour que sa tête (120A, 121A) soit noyée dans le puits (122A, 123A).

10. Appareil (1) selon l'une quelconque des revendications 1 à 9 **caractérisé en ce que** lesdits premier et deuxième éléments de positionnement (6, 10) présentent respectivement une première conformation et une deuxième conformation complémentaires destinées à interagir mécaniquement selon une coopération mâle/femelle lorsque lesdits cuve (2) et couvercle (3) sont réunis selon ledit premier agencement relatif prédéterminé.

11. Appareil (1) selon la revendication 10 **caractérisé en ce que** ladite première conformation est formée, au moins en partie, par ladite pièce de renfort (12).

12. Appareil (1) selon l'une quelconque des revendications précédentes **caractérisé en ce qu'**il comprend au moins une poignée de cuve (2D) solidaire de ladite cuve (2), ledit deuxième élément de positionnement (10) étant porté ou formé au moins en partie par ladite poignée (2D).

13. Appareil (1) selon la revendication 12 **caractérisé en ce que** ladite poignée de cuve est conformée pour ménager un logement destiné à accueillir ledit premier élément de positionnement (6).

14. Appareil (1) selon l'une des revendications 12 et 13 **caractérisé en ce que** la pièce de renfort (12) forme une pièce d'adaptation destinée à coopérer par correspondance de formes avec la poignée de cuve (2D), laquelle est métallique.

15. Appareil (1) selon l'une des revendications 1 à 14 **caractérisé en ce qu'**il comprend un système de verrouillage à baïonnette capable, lorsque lesdits cuve (2) et couvercle (3) sont réunis selon ledit premier agencement relatif prédéterminé, de verrouiller le couvercle (3) à la cuve (2) par pivotement du couvercle (3) relativement au premier élément de positionnement (6) selon un axe vertical central (X-X'), lesdits premier et deuxième éléments de positionnement (6, 10) étant conçus pour interagir mécaniquement, lorsque lesdits cuve (2) et couvercle (3) sont réunis selon ledit premier agencement relatif prédéterminé, pour verrouiller le positionnement angulaire relatif du premier élément de positionnement (6) et de la cuve (2) dans un plan horizontal perpendiculaire audit axe vertical central (X-X').

## Patentansprüche

1. Kochgerät (1) für Nahrungsmittel unter Druck, umfassend einen Behälter (2), einen Deckel (3) sowie ein erstes Positionierungselement (6), das fest mit dem Deckel (3) verbunden ist und aus mindestens einem Abschnitt (7), der auf dem Deckel (3) angeordnet ist, und einem zweiten Abschnitt (8) gebildet ist, der sich ausgehend von dem ersten Abschnitt (7) derart nach außen erstreckt, dass er radial von dem Deckel (3) vorragt, wobei das Gerät (1) auch ein zweites Positionierungselement (10) umfasst, das fest mit dem Behälter (2) verbunden ist, wobei der Behälter (2) und der Deckel (3) dazu konzipiert sind, gemäß mindestens einer ersten vorbestimmten relativen Anordnung vereinbar zu sein, in der das erste und das zweite Positionierungselement (6, 10) in Übereinstimmung gebracht sind, um es zu erlauben, den Deckel (3) auf dem Behälter (2) zu verriegeln, **dadurch gekennzeichnet, dass** das erste Positionierungselement (6) auch ein Verstärkungsteil (12) umfasst, das fest mit dem zweiten Abschnitt (8) verbunden und ausgestaltet ist, um den zweiten Abschnitt (8) mindestens thermisch zu schützen, wobei das Verstärkungsteil (12) aus einem wärmehärtbaren Material hergestellt ist, wie zum Beispiel aus einem Phenolharz oder einem Elastomer, und/oder aus einem mineralischen Material und/oder aus einem metallischen Material.

2. Kochgerät (1) nach Anspruch 1, **dadurch gekennzeichnet, dass** das Verstärkungsteil (12) auch ausgestaltet ist, um mechanisch den zweiten Abschnitt (8) zu verstärken.

3. Kochgerät (1) nach Anspruch 1 oder 2, **dadurch gekennzeichnet, dass** der zweite Abschnitt (8) aus einem Thermoplastmaterial hergestellt ist.

4. Kochgerät (1) nach einem der Ansprüche 1 bis 3, **dadurch gekennzeichnet, dass** der zweite Abschnitt (8) aus einem Stück mit dem ersten Abschnitt (7) derart gebildet ist, dass der erste und der zweite Abschnitt ein zusammenhängendes einstückiges Teil bilden.

5. Kochgerät nach Anspruch 4, **dadurch gekennzeichnet, dass** das einstückige Teil aus einem Thermoplastmaterial hergestellt ist.

6. Kochgerät (1) nach einem der Ansprüche 1 bis 5, **dadurch gekennzeichnet, dass** der zweite Abschnitt (8) eine Seitenwand (8A) umfasst, die sich vertikal zwischen einem unteren freien Rand (80A) und einem oberen freien Rand (80B), der mit dem ersten Abschnitt (7) verbunden ist, erhebt, wobei der untere freie Rand (80A) nach unten ausgerichtet ist, wenn der Deckel (3) und der Behälter (2) gemäß der ersten Anordnung vereint sind, wobei das Verstärkungsteil (12) den unteren Rand (80B) bedeckt.

7. Kochgerät nach Anspruch 6, **dadurch gekennzeichnet, dass** das Verstärkungsteil (12) nur den unteren Rand (80A) bedeckt.

8. Kochgerät (1) nach Anspruch 6 oder 7, **dadurch gekennzeichnet, dass** das Verstärkungsteil (12) einerseits eine Sohle (12A), die den unteren Rand (80A) verkleidet, und andererseits einen Einsatz (12B), der sich ausgehend von der Sohle (12A) im Wesentlichen parallel zu der Seitenwand (8A) erhebt, umfasst, wobei das erste Positionierungselement (6) auch Befestigungsmittel zum Befestigen des Einsatzes (12B) an dem zweiten Abschnitt (8) und daher die feste Verbindung des Verstärkungsteils (12) mit dem zweiten Abschnitt (8) umfasst.

9. Kochgerät (1) nach Anspruch 8, **dadurch gekennzeichnet, dass** die Befestigungsmittel mindestens eine Schraube (120) mit einem Kopf (120A) sowie eine Öffnung umfassen, die auf dem Grund eines Schachts (122A, 123A) angeordnet ist, ausgehend von der Sohle (12A) eingerichtet, wobei die Schraube dazu bestimmt ist, in den Schacht (122A, 123A) eingesetzt zu werden, damit ihr Kopf (120A, 121A) in dem Schacht (122A, 123A) eingelassen ist.

10. Kochgerät (1) nach einem der Ansprüche 1 bis 9, **dadurch gekennzeichnet, dass** das erste und das zweite Positionierungselement (6, 10) jeweils eine komplementäre erste Formgebung und zweite Formgebung aufweisen, die dazu bestimmt sind, mechanisch gemäß einer Stecker-/Buchse-Verbindung in Wechselwirkung zu treten, wenn der Behälter (2) und der Deckel (3) gemäß der ersten vorbestimmten relativen Anordnung vereint sind.

11. Kochgerät (1) nach Anspruch 10, **dadurch gekennzeichnet, dass** die erste Formgebung mindestens zum Teil von dem Verstärkungsteil (12) gebildet ist.

12. Kochgerät (1) nach einem der vorstehenden Ansprüche, **dadurch gekennzeichnet, dass** es mindestens einen Behältergriff (2D) umfasst, der fest mit dem Behälter (2) verbunden ist, wobei das zweite Positionierungselement (10) mindestens zum Teil von dem Griff (2D) getragen oder daraus gebildet ist.

13. Kochgerät (1) nach Anspruch 12, **dadurch gekennzeichnet, dass** der Behältergriff ausgestaltet ist, um eine Aufnahme einzurichten, die dazu bestimmt ist, das erste Positionierungselement (6) aufzunehmen.

14. Kochgerät (1) nach einem der Ansprüche 12 und 13, **dadurch gekennzeichnet, dass** das Verstärkungsteil (12) ein Anpassungsteil bildet, das dazu bestimmt ist, durch Formentsprechung mit dem Behältergriff (2D), der metallisch ist, zusammenzuwirken.

15. Kochgerät (1) nach einem der Ansprüche 1 bis 14, **dadurch gekennzeichnet, dass** es einen Bajonettverschluss umfasst, der, wenn der Behälter (2) und der Deckel (3) gemäß der ersten vorbestimmten relativen Anordnung vereint sind, fähig ist, den Deckel (3) an dem Behälter (2) durch Schwenken des Deckels (3) zu dem ersten Positionierungselement (6) entlang einer zentralen vertikalen Achse (X-X') zu verriegeln, wobei das erste und das zweite Positionierungselement (6, 10) dazu konzipiert sind, mechanisch in Wechselwirkung zu treten, wenn der Behälter (2) und der Deckel (3) gemäß der ersten vorbestimmten relativen Anordnung vereint sind, um die relative Winkelpositionierung des ersten Positionierungselements (6) und des Behälters (2) in einer horizontalen Ebene senkrecht zu der zentralen vertikalen Achse (X-X') zu verriegeln.

## Claims

1. A utensil (1) for cooking food under pressure, the utensil comprising a vessel (2), a lid (3), and a first positioning element (6) secured to the lid (3) and formed at least by a first portion (7) arranged on the lid (3) and by a second portion (8) that extends outwards from said first portion (7) so as to project radially beyond said lid (3), said utensil (1) also comprising a second positioning element (10) secured to the vessel (2), said vessel (2) and lid (3) being designed to be capable of being united at least in a first predetermined relative arrangement in which said first and second positioning elements (6, 10) are put into correspondence in order to enable the lid (3) to be locked to the vessel (2), the utensil being **characterized in that** said first positioning element (6) also includes a reinforcing part (12) that is secured to said second portion (8) and that is shaped at least to protect said second portion (8) thermally, said reinforcing part (12) being made of thermosetting material, e.g. such as a phenolic resin or an elastomer, and/or out of a mineral material, and/or out of a metal material.

2. A utensil (1) according to claim 1, **characterized in that** said reinforcing part (12) is also shaped to reinforce said second portion (8) mechanically.

3. A utensil (1) according to claim 1 or claim 2, **characterized in that** said second portion (8) is made of a thermoplastic material.

4. A utensil (1) according to any one of claims 1 to 3, **characterized in that** said second portion (8) is made integrally with said first portion (7), such that said first and second portions form a single-piece part.

5. A utensil (1) according to claim 4, **characterized in that** said single-piece part is made of thermoplastic material.

6. A utensil (1) according to any one of claims 1 to 5, **characterized in that** said second portion (8) has a side wall (8A) that extends vertically between a free bottom edge (80A) and a top edge (80B) connected to said first portion (7), said free bottom edge (80A) facing downwards when the lid (3) and the vessel (2) are united in said first arrangement, said reinforcing part (12) covering said bottom edge (80B).

7. A utensil (1) according to claim 6, **characterized in that** said reinforcing part (12) covers only said bottom edge (80A).

8. A utensil (1) according to claim 6 or claim 7, **characterized in that** said reinforcing part (12) comprises firstly a soleplate (12A) that covers said bottom edge (80A), and secondly an insert (12B) rising from said soleplate (12A) substantially parallel to said side wall (8A), said first positioning element (6) also including fastener means for fastening said insert (12B) to said second portion (8) so as to secure the reinforcing part (12) to the second portion (8).

9. A utensil (1) according to claim 8, **characterized in that** said fastener means comprise at least one screw (120) with a head (120A), together with an orifice arranged in the bottom of a well (122A, 123A) formed from said soleplate (12A), said screw being designed to be inserted in the well (122A, 123A) so that its head (120A, 121A) is sunk into the well (122A, 123A).

10. A utensil (1) according to any one of claims 1 to 9, **characterized in that** first and second positioning elements (6, 10) respectively present first and second complementary shapes for interacting mechanically with male/female co-operation when said vessel (2) and lid (3) are united in said first predetermined relative arrangement.

11. A utensil (1) according to claim 10, **characterized in that** said first shape is formed, at least in part, by said reinforcing part (12).

12. A utensil (1) according to any preceding claim, **characterized in that** it includes at least one vessel handle (2D) secured to said vessel (2), said second positioning element (10) being carried by or being formed at least in part by said handle (2D).

13. A utensil (1) according to claim 12, **characterized in that** said vessel handle is shaped to provide a housing for receiving said first positioning element (6).

14. A utensil (1) according to claim 12 or claim 13, **characterized in that** the reinforcing part (12) forms an adapting part for co-operating by corresponding shapes with the vessel handle (2D), which handle is made of metal.

15. A utensil (1) according to any one of claims 1 to 14, **characterized in that** it includes a bayonet locking system that is capable, when said vessel (2) and lid (3) are united in said first predetermined relative arrangement, of locking the lid (3) to the vessel (2) by turning the lid (3) relative to the first positioning element (6) about a central vertical axis (X-X'), said first and second positioning elements (6, 10) being designed to interact mechanically when said vessel (2) and lid (3) are united in said first predetermined relative arrangement so as to lock the relative angular positioning between the first positioning element (6) and the vessel (2) in a horizontal plane perpendicular to said central vertical axis (X-X').
